## Europäisches Patentamt
## European Patent Office
## Office européen des brevets

(19)

(11) Numéro de publication: **0 254 605 B1**

(12) **FASCICULE DE BREVET EUROPEEN**

(45) Date de publication du fascicule du brevet:
09.05.90

(51) Int. Cl.⁵: **B64C 27/82**

(21) Numéro de dépôt: **87401311.3**

(22) Date de dépôt: **11.06.87**

(54) **Dispositif directionnel et stabilisateur à rotor anti-couple caréné et incliné et à empennage en "V" dissymétrique, et hélicoptère équipé d'un tel dispositif.**

(30) Priorité: **16.06.86 FR 8608644**

(43) Date de publication de la demande:
**27.01.88 Bulletin 88/4**

(45) Mention de la délivrance du brevet:
**09.05.90 Bulletin 90/19**

(84) Etats contractants désignés:
**DE GB IT**

(56) Documents cités:
**FR-A- 2 167 249**
**US-A- 2 407 327**
**US-A- 2 702 084**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Mouille, René Louis, Villa "La Pinède" Le Coton Rouge, F-13100 Aix-en-Provence(FR)**
Inventeur: **Rollet, Philippe Alain, Lotissement "Les Roches Blanches" No 25, F-13880 Velaux(FR)**

(74) Mandataire: **Lepeudry-Gautherat, Thérèse et al, ARMENGAUD JEUNE CABINET LEPEUDRY 6, rue du Fg. St-Honoré, F-75008 Paris(FR)**

## Description

La présente invention concerne un dispositif directionnel et stabilisateur pour aérodyne à voilure tournante comportant au moins un rotor qui, en configuration de rotor sustentateur, est entraîné mécaniquement en rotation par au moins un moteur en absorbant au moins partiellement la puissance motrice, et tel que le fuselage de l'a érodyne est soumis à la réaction du couple moteur d'entraînement du rotor sustentateur, cette réaction étant compensée par le dispositif selon l'invention.

L'invention a plus précisément pour objet un dispositif directionnel et stabilisateur, destiné en particulier à l'équipement des hélicoptères comportant un unique rotor sustentateur ou principal, entraîné en rotation notamment par un ou plusieurs moteurs supportés par le fuselage de l'hélicoptère, sur lequel s'exerce un couple dû à la réaction du couple d'entraînement du rotor sustentateur et qu'il est nécessaire de compenser par un couple antagoniste de même valeur.

Pour fournir un tel couple antagoniste, la Demanderesse a équipé depuis de nombreuses années ses hélicoptères des types "Gazelle" et "Dauphin" d'un dispositif connu sous la dénomination de "Fenestron", et constitué d'un rotor anti-couple caréné. Ce dernier comprend une hélice multipale à pas variable qui est, d'une part, montée coaxialement, avec un faible jeu radial, dans une veine carénée de section circulaire ménagée transversalement dans la partie inférieure d'une dérive verticale solidaire de l'extrémité arrière d'une poutre de queue prolongeant vers l'arrière le fuselage de l'hélicoptère, et d'autre part, entraînée en rotation autour de l'axe de la veine, qui est sensiblement perpendiculaire au plan de symétrie vertical de l'aérodyne. L'hélice multipale est supportée par une boîte de transmission auxiliaire, qui est elle-même maintenue dans la veine par des bras rigides et qui renferme un jeu de pignons côniques entraînant l'hélice et recevant lui-même le mouvement d'entraînement d'un arbre de transmission qui traverse radialement la veine et est relié à une sortie de la boîte de transmission principale. Le pas des pales de l'hélice peut être modifié sans effet du pilote par une servocommande également supportée par la boîte de transmission auxiliaire et actionnée par une bielle de commande de pas qui traverse radialement la veine et est reliée par une tringlerie et/ou des câbles au palonnier manoeuvré par le pilote de l'hélicoptère. Lorsque le pilote donne aux pales de l'hélice un pas positif, la rotation de l'hélice dans la veine, qui est évasée dans sa section d'entrée, d'un côté de la dérive verticale, et qui est légèrement divergente jusqu'à sa section de sortie, dans l'autre côté de la dérive, produit une poussée aérodynamique transversale qui s'exerce dans le sens opposé au sens d'écoulement de l'air au travers de la veine, et cette poussée développe sur le fuselage, par rapport à l'axe du rotor principal, un moment antagoniste au couple d'entraînement dudit rotor principal. La poussée transversale développée par le rotor caréné remplit ainsi la fonction anti-couple en vol stationnaire, tandis qu'en vol de translation vers l'avant, le rotor anticouple est mis progressivement par le pilote à un pas sensiblement nul et la fonction anti-couple est alors remplie en majeure partie par une poussée aérodynamique latérale se développant, proportionnellement au carré de la vitesse de déplacement, sur la partie supérieure de la dérive verticale, qui est équipée d'un profil aérodynamique présentant une cambrure, et, éventuellement, un vrillage, et qui est donc conformée comme une aile portante.

En vol stationnaire comme en vol de translation, le pilotage de l'hélicoptère en lacet est réalisé par une variation commandée de la poussée du rotor anticouple caréné, autour de sa position correspondant à l'équilibrage du couple moteur.

Par rapport la disposition classique des rotors anti-couple d'hélicoptères, qui comprend un rotor libre de diamètre plus grand que le rotor caréné équipé de pales à pas variable et monté en rotation dans un plan sensiblement vertical autour d'un axe transversal supporté latéralement par un pylône solidaire de l'extrémité arrière de la poutre de queue, de façon à engendrer, dans toutes les configurations de vol stationnaire ou de translation, une force latérale variable, compensatrice de la réaction du couple d'entraînement du rotor sustentateur et permettant le pilotage de l'appareil en lacet, les avantages du rotor anti-couple caréné sont importants, nombreux et bien connus. Les rotors de queue classiques, surtout sur les hélicoptères de faible tonnage, sont très vulnérables aux projections de pierres et de gravats, projetés par le souffle du rotor principal, à proximité du sol et au sol, ainsi que vis-à-vis des buissons, branchages et du sol lui-même, en cas d'atterrissages trop cabrés, et ils constituent un danger permanent pour les personnels au sol. En vol, les rotors arrière classiques fonctionnent dans un environnement difficile et dans de mauvaises conditions aérodynamiques, et ils sont soumis à des sollicitations sévères et à des phénomènes dynamiques pouvant être instables, particulièrement aux vitesses élevées de déplacement en translation vers l'avant, puisqu'ils sont soumis non seulement au vent relatif mais également au souffle et aux tourbillons issus du rotor principal et du fuselage, et qu'il se produit une interférence entre le rotor anti-couple et la dérive arrière de ces hélicoptères diminuant le rendement de l'ensemble. De plus, la structure des rotors arrière classiques est souvent complexe et fragile, avec des articulations soumises à des efforts centrifuges importants provenant des pales, et nécessite, pour ces différentes raisons, une maintenance importante et des remplacements périodiques de nombreux composants à durée de vie limitée ou à faible potentiel entre révisions.

Au contraire, le rotor anti-couple caréné élimine tout risque d'accident pour le personnel et est lui-même protégé vis-à-vis des impacts avec d'éventuels obstacles extérieurs, ou avec le sol pendant les approches et atterrissages trop cabrés. Le rotor caréné offre un meilleur rendement aérodynamique et diminue très sensiblement la traînée aérodynamique totale de l'appareil aux vitesses élevées, d'où une puissance consommée légèrement inférieure en vol de translation vers l'avant à grande vitesse, et la possibilité d'atteindre des vitesses de déplacement importantes sans sollicitations excessives des organes du rotor. En fait, aux vitesses de translation élevées, comme le pas des pales est pratiquement nul, les pales et leurs organes de commande ne subissent que de très faibles contraintes alternées, et l'ensemble du rotor anti-couple et de la transmission qui l'entraîne ne supporte qu'une faible charge, et en cas de défaillance du rotor anti-couple caréné, l'hélicoptère peut revenir à sa base en vol de translation, sans avoir à effectuer un atterrissage d'urgence en autorotation, comme cela est le cas si l'hélicoptère est équipé d'un rotor anti-couple conventionnel. De plus, le faible niveau de contrainte dans les pales en service et l'élimination du risque d'instabilité du rotor, en raison de la bonne rigidité en flexion et en torsion des courtes pales de ce rotor caréné font que la durée de vie des pales est théoriquement infinie. De plus, les rotors anticouples carénés, tels que ceux montés par la Demanderesse sur ses hélicoptères légers, ne nécessitent au pied de chaque pale, ni articulation de battement, ni articulation de traînée, mais seulement une articulation de pas qui, compte tenu des faibles charges radiales qui la sollicitent et du fait que les charges axiales centrifuges des pales sont transmises au moyeu par un organe torsible, peut être réalisée par un palier lisse de type autolubrifié. Il en résulte que les travaux de maintenance d'un rotor anti-couple caréné sont considérablement simplifiés.

Il est bien connu que le rendement aérodynamique d'un rotor caréné est supérieur à celui d'un rotor classique à veine libre de même diamètre. Cette particularité est mise à profit pour réduire le diamètre du rotor anticouple caréné par rapport à celui qui serait nécessaire au rotor libre, ce qui permet de l'intégrer dans un carénage vertical de dimensions raisonnables, et à efficacité égale, de ne pas consommer en vol stationnaire, sensiblement plus de puissance qu'un rotor à veine libre.

De plus, si la combinaison sur un même hélicoptère d'une dérive verticale portance latérale et d'un rotor anti-couple caréné, réalisés selon les brevets français 1 593 008, 78 20 258 et 83 04 448 de la Demanderesse, permet de remplir avantageusement la fonction anti-couple et la stabilisation de l'hélicoptère en lacet, elle n'assure par contre aucun rôle actif dans la stabilisation de l'hélicoptère en tangage, particulièrement à grande vitesse.

A cet effet, il est nécessaire d'ajouter à l'arrière de l'hélicoptère, des surfaces stabilisatrices horizontales supplémentaires, par exemple sous la forme respectivement de deux stabilisateurs horizontaux, supportés par la poutre de queue, de part et d'autre de celle-ci, et juste en avant du rotor arrière. Ceci a pour conséquence une augmentation notable de la masse structurale.

Afin de remédier à ces inconvénients, il a déjà été proposé, par le brevet français 2 167 249 de la Demanderesse, de surmonter le carénage annulaire rigidifié, dans lequel est logé le rotor anti-couple caréné, d'un empennage en forme de "V", dit "papillon"' dont les deux branches s'étendent au-dessus d'un plan horizontal passant par le sommet du carénage logeant le rotor caréné, et chacun d'un côté d'un plan vertical passant par ce sommet, les deux branches de l'empennage en "V" ayant, d'une part, des plans moyens s'étendant symétriquement l'un de l'autre de part et d'autre de ce plan vertical, mais présentant, d'autre part, des profils aérodynamiques porteurs disposés de façon antisymétrique par rapport à l'axe général longitudinal de l'hélicoptère. Il a de plus été proposé que chaque branche de l'empennage en "V" soit de forme en plan sensiblement trapézoïdale, et dotée d'un profil aérodynamique tel que se trouve développée une poussée aérodynamique perpendiculaire au plan de la branche d'empennage considérée, ce profil ayant une configuration progressivement évolutive depuis l'emplanture, où il est symétrique et épais, vers l'extrémité, où il devient mince, soit en restant du type symétrique mais affecté d'un vrillage linéaire autour de l'axe longitudinal de la branche d'empennage, soit en devenant graduellement dissymétrique et affecté ou non d'un vrillage autour de cet axe longitudinal de la branche d'empennage, chacune de ces branches pouvant de plus, dans le cas d'un hélicoptère rapide, être équipée d'un volet mobile de bord de fuite dont le braquage est assuré dans le sens du vrillage général du profil et dont la commande est conjuguée et coordonnée, de façon connue, avec la commande de pas cyclique longitudinal du rotor principal de l'hélicoptère, et n'entre en action qu'à partir d'une certaine valeur de ce pas cyclique longitudinal. Cependant, des essais menés sur un dispositif directionnel et stabilisateur réalisé conformément aux enseignements du brevet français 2 167 249 n'ont pas permis d'atteindre tous les résultats avantageux escomptés.

Par ailleurs, certains constructeurs d'hélicoptères équipant leurs appareils de rotors anti-couple de structure conventionnelle ont déjà incliné sur la verticale le plan de rotation des rotors arrière, ce qui développe une composante d'efforts dans la direction verticale, cette composante ayant l'inconvénient d'être permanente (au contraire d'un rotor anti-couple caréné qui ne produit aucune poussée latérale en vol de croisière, car ses pales ont alors un pas pratiquement nul). Certains constructeurs ont également monté des gouvernes mobiles sur les empennages arrière de leurs hélicoptères, la manoeuvre de ces gouvernes mobiles étant assurée par des actionneurs commandés automatiquement, en fonction des évolutions de l'hélicoptère, par un calculateur recevant depuis de nombreux capteurs des informations relatives à un grand nombre de paramètres de vol, qui sont pris en compte pour la détermination des angles de braquage des gouvernes. Ces réalisations ont pour inconvénient majeur qu'elles manquent de fiabilité, et nécessitent des duplications de leurs commandes électriques et élecroniques pour assurer la sécurité de l'appareil.

L'invention a pour but de proposer un dispositif assurant simultanément la fonction anti-couple et les stabilités statiques et dynamiques de l'aérodyne autour des axes de lacet et de tangage.

A cet effet, le dispositif directionnel et stabilisateur selon l'invention, du type qui comprend, en combinaison:

ce multipale à pas variable, montée, d'une part, coaxialement dans une veine carénée de section circulaire ménagée transversalement dans un carénage situé à l'arrière du fuselage, et entraînée, d'autre part, en rotation autour de l'axe de la veine, et

un empennage en "V" porté par la structure du carénage logeant le rotor caréné et comportant deux surfaces aérodynamiques disposées en V, qui se rejoignent au sommet du carénage logeant le rotor caréné sans venir en-dessous d'un plan horizontal passant par ce sommet, se caractérise en ce que, de plus,

le plan moyen du carénage logeant le rotor caréné est incliné par rapport au plan vertical de symétrie de l'aérodyne d'un angle compris dans une plage angulaire de $0 < \varphi f \leqq 45°$, de manière que, avec un sens de rotation choisi du rotor caréné et un agencement déterminé de la commande du pas des pales dudit rotor – et lesdites pales étant commandées à un pas positif – la poussée résultante suivant l'axe du rotor caréné soit dirigée dans un sens tel que, d'une part la composante de cette poussée dirigée parallèlement à l'axe général transversal de l'aérodyne crée, sur le fuselage, par rapport à l'axe du rotor principal, un moment s'opposant au couple d'entraînement dudit rotor principal, et que, d'autre part, la composante de cette même poussée parallèle à l'axe général vertical de l'aérodyne, soit vers le haut, chacune des deux surfaces aérodynamiques présente un plan moyen, et les deux plans moyens s'étendent de façon dissymétrique par rapport au plan vertical de symétrie de l'aérodyne, le plan moyen d'une première surface aérodynamique étant placé par rapport à ce plan vertical de symétire de l'aérodyne, soit du côté qui est opposé à celui vers lequel est dirigée la poussée du rotor anticouple en vol stationnaire et formant alors avec l'horizontale un angle compris dans une plage angulaire allant de 0 à 45°, soit du côté vers lequel est dirigée la poussée du rotor anticouple en vol stationnaire, le plan moyen de la seconde surface stabilisatrice étant toujours placé par rapport au plan vertical de symétrie de l'aérodyne du côté vers lequel est dirigée la poussée du rotor anticouple en vol stationnaire et formant alors avec la verticale un angle compris dans une plage angulaire allant de 0 à 45°.

La première surface aérodynamique comporte un profil aérodynamique tel que se crée en lui en vol de translation une force aérodynamique résultante ayant une composante verticale déportante, c'est-à-dire dirigée vers le bas.

La seconde surface aérodynamique comporte un profil aérodynamique tel que se crée sur lui en vol de translation une force aérodynamique résultante ayant, d'une part, une composante dirigée, parallèlement à l'axe général transversal de l'aérodyne, dans le même sens que la composante suivant un axe parallèle de la poussée du rotor anticouple et, d'autre part, une composante dirigée parallèlement à l'axe général vertical de l'aérodyne, vers le bas.

Pour éviter d'éventuelles interférences entre les surfaces aérodynamiques et le souffle du rotor caréné, la distance séparant la jonction des deux surfaces aérodynamiques de l'axe de la veine carénée peut être au moins égale à une fois et demie le diamètre de ladite veine.

Cette disposition d'ensemble présente les avantages suivants:

– le rotor anticouple caréné participe à la portance générale, du fait de la composante verticale de la poussée inclinée qu'il produit et qui amène, à puissance installée egale, une amélioration des performances de sustentation en vol stationnaire. Par exemple, pour une inclination de 45° du carénage logeant le rotor anticouple caréné, le gain de puissance totale en vol stationnaire est d'environ 5%.

- Elle permet l'obtention d'une réduction sensible de la signature radar par l'inclinaison des surfaces aérodynamiques de l'empennage en V, associée à l'inclinaison du carénage dans lequel est ménagée la veine du rotor anticouple caréné. En effet, la réflexion des échos radar est moins élevée quand on dispose des surfaces inclinées par rapport à l'émission radar. Cette disposition est intéressante pour réduire la vulnérabilité des hélicoptères militaires modernes.

- Elle ne nécessite pratiquement aucun supplément de masse par rapport aux dispositifs directionnels et stabilisateurs antérieurs, moins performants.

Bien que l'inclinaison de la veine du rotor anticouple caréné entraîne à priori un inconvénient qui consiste à occasionner en vol de croisière un couplage entre les modes propres naturels de lacet et de tangage, ce couplage peut être maîtrisé par une disposition judicieuse des surfaces aérodynamiques de l'empennage "en V", et en particulier de la seconde surface aérodynamique.

Selon un premier mode de réalisation avantageux, le plan moyen de la première surface aérodynamique est horizontal et forme avec le plan moyen de la seconde surface aérodynamique un angle supérieur à 90°. Dans ce cas, la première surface aérodynamique placée du côté du rotor anticouple qui est opposé à celui vers lequel est dirigée la poussée de ce rotor anticouple en vol stationnaire, fait office d'empennage horizontal. Cette surface aérodynamique étant placée en position maximum vers l'arrière par rapport à l'axe du rotor principal, a donc une efficacité accrue en raison du bras de levier augmenté.

Selon un second exemple avantageux de réalisation, le plan moyen du carénage logeant le rotor caréné est incliné à 45° sur la verticale, le plan moyen de la première surface aérodynamique étant dans le plan moyen du carénage logeant le rotor caréné, et les deux surfaces aérodynamiques ayant leurs plans moyens sensiblement perpendiculaires l'un à l'autre. Cet exemple particulier de réalisation est avantageux du point de vue constructif, puisqu'il consiste à incliner de 45° l'ensemble du rotor anticouple caréné et de la dérive verticale de la réalisation actuelle qu'on retrouve sur les hélicoptères de marque "Gazelle" et "Dauphin" de la Demanderesse, et à implanter sensiblement perpendiculairement sur cet ensemble une autre surface aérodynamique de façon à compléter l'empennage "en V".

Afin de produire une déportance nécessaire pour assurer l'équilibre de l'aérodyne en vol de croisière et afin d'éviter en particulier une assiette longitudinale du fuselage trop inclinée sur l'avant, la première surface aérodynamique présente une cambrure à courbure tournée vers le haut et/ou une loi de vrillage et/ou une incidence négative, et, dans un mode de réalisation simplifié sur le plan de la structure, cette première surface aérodynamique est entièrement fixe.

Avantageusement, la seconde surface aérodynamique présente, quant à elle une cambrure et/ou une loi de vrillage et/ou une incidence choisie de façon produire un effort aérodynamique latéral assurant au moins partiellement la fonction anticouple en vol de croisière de l'aérodyne, et dans une réalisation simple, cette seconde surface aérodynamique est également entièrement fixe.

Mais, si on souhaite assurer, au cours de toutes les manoeuvres du rotor anticouple caréné de l'aérodyne, un découplage du lacet par rapport au tangage, il est avantageux de prévoir sur l'empennage "en V" un dispositif assurant une variation de portance. Dans un premier exemple, cet avantage est obtenu par le fait que l'une des surfaces aérodynamiques est mobile sur toute son envergure et articulée autour d'un axe de pivotement dirigé selon son envergure en étant asservie par une commande de braquage reliée à la commande du pas du rotor anticouple caréné de l'hélicoptère.

Selon un autre exemple de réalisation, cet avantage est également obtenu si une des surfaces aérodynamiques comporte au moins un volet mobile de bord de fuite, s'étendant sur une partie de son envergure, et dont le braquage est asservi par une commande reliée à la commande de pas du rotor anticouple caréné de l'hélicoptère.

Enfin, afin d'augmenter l'efficacité de la seconde surface aérodynamique et/ou augmenter le rappel en lacet, il est avantageux que la première surface aérodynamique, dans le cas où cette dernière est sensiblement horizontale, porte à son extrémité un petit plan aérodynamique profilé ou "oreille", sensiblement perpendiculaire au plan moyen de ladite surface aérodynamique.

L'invention a également pour objet, un hélicoptère équipé d'un dispositif tel que présenté ci-dessus, et caractérisé par un arrangement coordonné de la commande du pas des pales du rotor anti-couple caréné avec la commande cyclique longitudinale du rotor principal de façon que l'accroissement du pas des pales du rotor anti-couple introduise automatiquement une adaptation compensatrice du pas cyclique longitudinal du rotor principal, limitant les variations d'assiette longitudinale du fuselage de l'hélicoptère.

L'invention sera mieux comprise, et d'autres caractéristiques et avantages de l'invention ressortiront à la lecture de la description détaillée donnée ci-dessous de plusieurs exemples de réalisation, décrits à titre non limitatifs en référence aux dessins annexés sur lesquels:

la figure 1 est une vue schématique en perspective d'un hélicoptère équipé, l'extrémité de sa poutre de queue, d'un dispositif directionnel et stabilisateur selon l'invention,

la figure 2 est une vue en perspective et à plus grande échelle limitée au dispositif directionnel et stabilisateur de l'hélicoptère de la figure 1,

les figures 3a, 3b, 3c et 3d représentent l'évolution des profils aérodynamiques des surfaces aérodynamiques de l'empennage "en V" du dispositif de la figure 2,

la figure 4 est une coupe schématique vue de l'avant, selon les flèches F-F de la figure 2, de ce dispositif,

la figure 5 est une vue analogue à la figure 4 d'un second exemple de dispositif directionnel et stabilisateur,

la figure 6 est également une vue analogue à la figure 4 pour un troisième exemple de dispositif directionnel et stabilisateur, et

la figure 7 est également une vue analogue à la fiugre 4 pour un quatrième exemple de dispositif directionnel et stabilisateur.

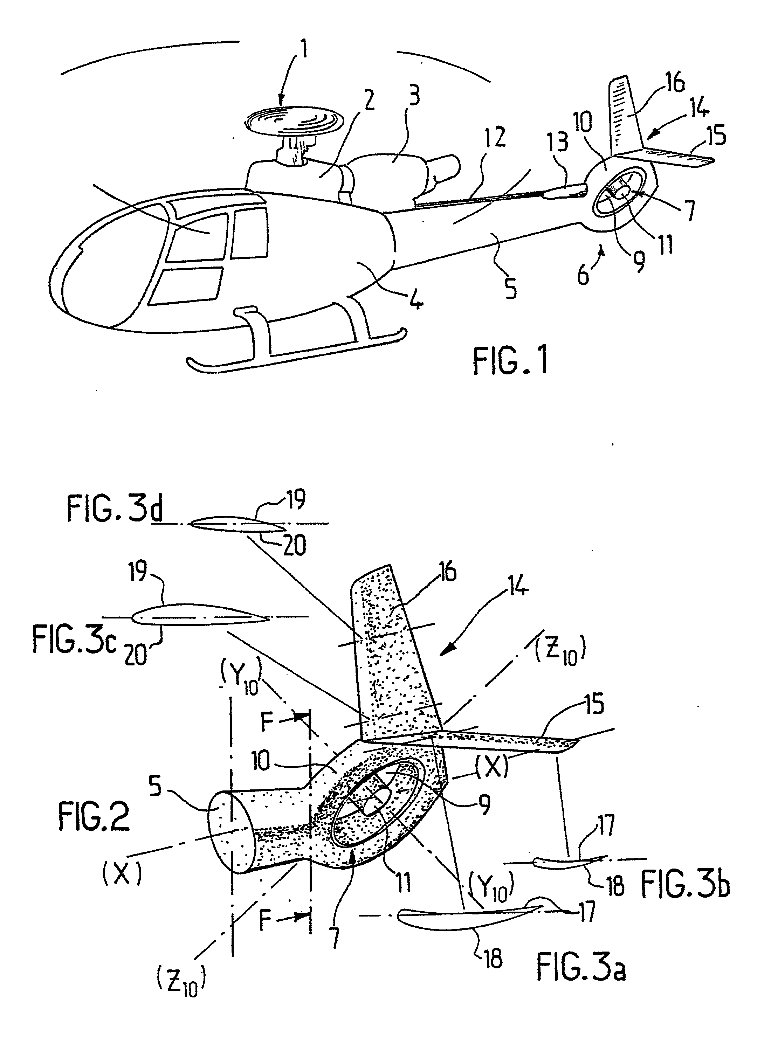

Sur la figure 1, on a représenté schématiquement un hélicoptère équipé d'un seul rotor sustentateur, dont la tête de rotor est repérée en 1, et qui est entraîné en rotation autour de son axe par une boîte de transmission principale 2 et un groupe turbomoteur 3 supportés sur la partie supérieure du fuselage 4, qui se prolonge vers l'arrière par une poutre de queue 5, dont l'extrémité arrière porte le dispositif directionnel et stabilisateur 6 faisant l'objet de l'invention.

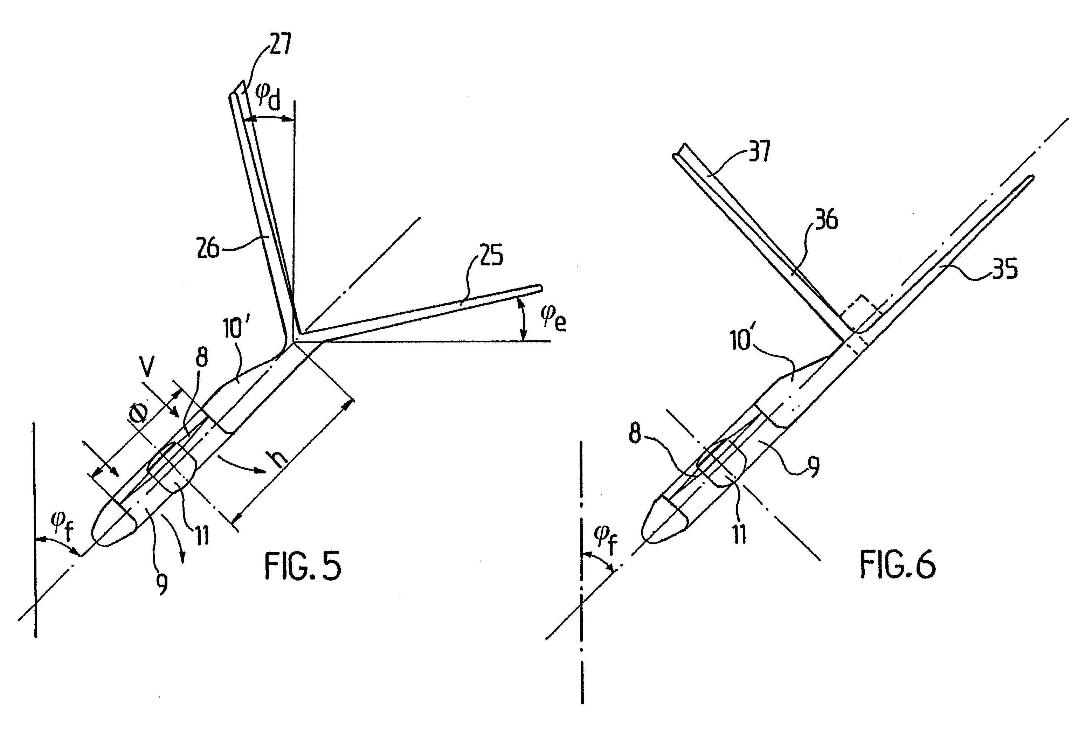

Ce dispositif 6, également décrit ci-dessous en référence aux figures 2 à 4, comprend un rotor anticouple caréné 7, dont la structure n'est pas décrite de manière détaillée ci-dessous, car ce rotor est réalisé conformément aux enseignements des brevets français 1 593 008, 78 20 258 (FR-A 2 430 354), et 83 04 448 (FR-A 2 542 695) de la Demanderesse, et dont les descriptions sont incorporées dans le présent mémoire descriptif par voie de référence. Pour la bonne compréhension de la description qui suit, il suffit de mentionner que ce rotor anti-couple caréné comprend essentiellement une hélice multiple à pas variable 8, non représentée sur les figures 1, 2 et 4, afin de ne pas surcharger les dessins, mais schématiquement représentée sur les figures 5 et 6, et cette hélice 8 est montée coaxialement, avec un faible jeu radial, dans une veine carénée 9, de section transversale circulaire, ménagée transversalement dans un carénage 10, relativement épais, aménagé en structure annulaire rigide et directement solidaire de l'extrémité arrière de la poutre de queue 5. Dans cette veine carénée 9, qui est de préférence évasée vers l'extérieur à ses deux sections d'extrémité, et légèrement divergente de sa section d'entrée, située dans la face latérale de droite du carénage 10, par rapport à l'axe général longitudinal XX situé dans le plan vertical de symétrie de l'hélicoptère, et au sens de déplacement vers l'avant de ce dernier (c'est-à-dire en arrière du plan des figures 1 et 2), à sa section de sortie, située dans la face latérale de gauche du carénage 10 (face directement visible sur les figures 1 et 2), l'hélice multiple 8 est entraînée en rotation et supportée par une boîte de transmission auxiliaire 11, elle-même maintenue dans la partie centrale de la veine 9 par des bras-supports (non représentés). Cette boîte de transmission auxiliaire 11 renferme un renvoi d'angle, constitué d'un couple d'engrenages coniques dont l'un est en prise avec un arbre de l'hélice 8, afin de l'entraîner en rotation dans la veine 9, et dont l'autre reçoit le mouvement de rotation d'un arbre d'entraînement 12, qui traverse radialement la veine 9 et la structure du carénage 10, et s'étend jusqu'à une sortie auxiliaire de la boîte de transmission principale 2, en passant sous un capot profilé 13 recouvrant la partie supérieure de la zone de raccordement de la poutre de queue 5 au carénage 10 (voir figure 1). Sous le carter de la boîte de transmission auxiliaire 11 est également logé un mécanisme ou servomécanisme de commande du pas des pales de l'hélice 8, et ce servomécanisme est actionné par une bielle (non représentée) qui traverse radialement la veine 9 et le carénage 10, et est reliée par une tringlerie et une boucle de câble au palonnier du poste de pilotage, à l'avant de l'hélicoptère, d'une manière bien connue par exemple par le brevet français 2 167 249.

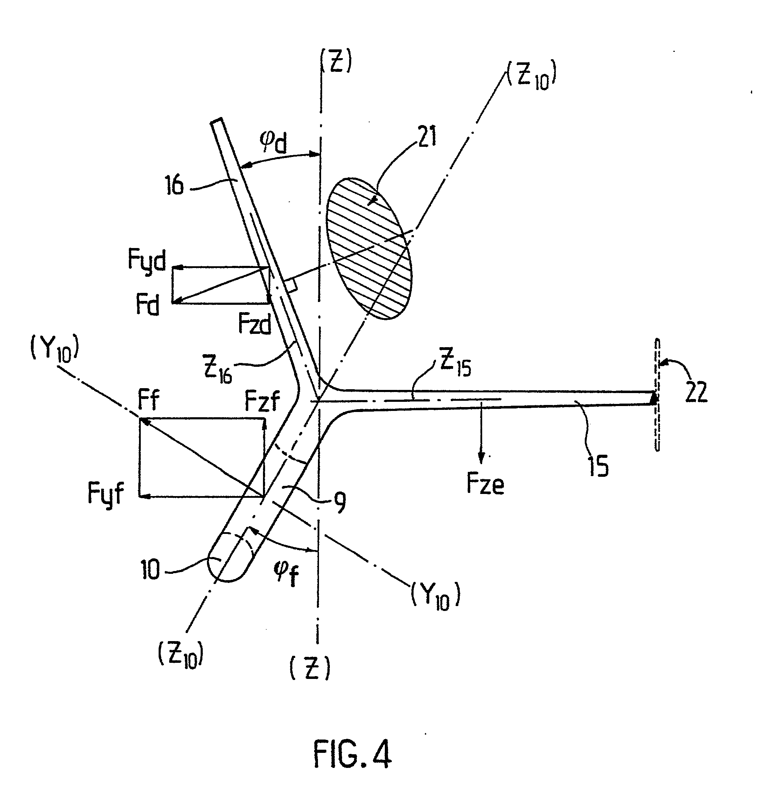

Selon une mesure technique originale et particulière aux réalisations décrites dans le présent mémoire, le plan moyen du carénage 10, indiqué par sa trace Z10 dans un plan perpendiculaire à l'axe général longitudinal XX et passant par l'axe Y 10 de la veine 9 (lequel passe à proximité de l'axe XX), forme avec la direction verticale un angle $\varphi f$ (voir figure 4) qui est compris dans une plage angulaire de $0° < \varphi f \leqq 45°$ et qui, dans l'exemple particulier des figures 1 à 4, est sensiblement de 30°. On obtient ainsi un rotor anti-couple caréné 7, de type dit "Fenestron" monté dans un carénage 10 qui est disposé à l'arrière de la poutre de queue 5 dans le prolongement du fuselage 4, et incliné par rapport à la verticale d'un angle choisi entre $0° < \varphi f \leq 45°$. Le sens de rotation de l'hélice 8 dans la veine 9 et la disposition de la commande du pas de ses pales à pas variable sont tels qu'aux pas positifs des pales, l'hélice développe une poussée $F_f$ dirigée selon son axe Y 10-Y 10 et de bas en haut, perpendiculairement au plan moyen du carénage 10, comme indiqué sur la figure 4, et dans le sens contraire à celui de l'écoulement d'air qui traverse la veine 9.

En plus du rotor anti-couple caréné et incliné 7, le dispositif 6 comprend également un empennage "en V" dit "papillon" 14, c'est-à-dire constitué de deux surfaces aérodynamiques 15 et 16 disposées en V. Cet empennage 14 est fixé sur le sommet du carénage 10 , de telle sorte que les plans moyens des surfaces aérodynamiques 15 et 16, indiqués respectivement par leur trace Z15 et Z16 (voir figure 4) se coupent l'un l'autre dans le plan moyen Z 10 du carénage 10, dont le sommet constitue la zone de jonction ou de raccordement des deux surfaces aérodynamiques 15 et 16, lesquelles ont chacune une forme en plan sensiblement trapézoïdale (voir figures 1 et 2). Par construction, les plans moyens Z 15 et Z 16 ne s'étendent pas en dessous du plan horizontal passant par leur point de convergence au sommet du carénage 10, et chacun d'eux s'étend d'un côté du plan vertical de trace ZZ (voir figure 4) passant par ce point de convergence, et, de plus, le plan moyen Z 15 de la première surface aérodynamique 15 forme avec la direction horizontale un angle $\varphi e$ compris dans une plage angulaire s'étendant de 0 à 45°, tandis que le plan moyen Z 16 de la seconde surface aérodynamique 16 forme avec la direction verticale (Z) un angle $\varphi d$ également compris dans la plage angulaire s'étendant de 0 à 45° (voir figure 5).

En fait, et plus précisément, les plans moyens Z 15 et Z 16 des surfaces 15 et 16 s'étendent, de préférence de manière dissymétrique, l'un d'un côté et l'autre de l'autre côté du plan bissecteur du dièdre formé par le plan moyen Z 10 du carénage 10 et le plan vertical de trace ZZ passant par le sommet du carénage 10. Dans l'exemple des figures 1 à 4, l'angle d'inclinaison du plan moyen Z 16 sur la verticale est sensiblement de 20°, et l'angle d'inclinaison du plan moyen Z 15 sur l'horizontale est nul, de sorte que la première surface aérodynamique 15 s'étend latéralement et horizontalement, vers l'extérieur du plan vertical ZZ par rapport à l'axe général longitudinal XX, au plan vertical de symétrie de l'hélicoptère, ou encore du côté du rotor anti-couple caréné 7 qui est opposé à celui vers lequel est dirigée la poussée $F_f$ de ce rotor, à pas positif de ses pales. La première surface 15 remplit ainsi la fonction de l'empennage horizontal associé aux rotors anti-couple de type "Fenestron" de l'état de la technique.

De plus, cette surface aérodynamique 15 est cambrée, comme représenté sur les figures 3a et 3b, qui montrent l'évolution du profil aérodynamique de la surface 15 et représentent deux coupes transversales de cette dernière respectivement à proximité de son emplanture sur le sommet du carénage 10 et à proximité de son extrémité libre. Ces figures 3a et 3b montrent que la première surface aérodynamique 15 présente sur toute son envergure un profil dissymétrique cambré, qui s'amincit progressivement de l'emplanture vers l'extrémité libre, et à courbure tournée vers le haut, et délimité par une surface d'extrados 17 essentiellement concave et une surface d'intrados 18 convexe, de rayon de courbure plus faible que celui de la partie concave de la surface d'extrados 17, de façon à produire en vol de croisière, la déportance ou portance négative $F_{Ze}$ (voir figure 4) nécessaire pour assurer l'équilibre de l'hélicoptère en tangage. Il est en effet bien connu, que, sur un hélicoptère, on cherche à développer des forces de déportance au niveau du rotor arrière afin d'éviter une assiette longitudinale de vol trop-à-piquer du fuselage dans la mesure où, lorsque le pilote donne du pas cyclique aux pales du rotor principal pour le vol en translation vers l'avant, le rotor principal s'incline vers l'avant et le fuselage prend une position d'équilibre également inclinée vers l'avant.

Pour produire la déportance $F_{Ze}$, la première surface 15 peut, en plus de sa cambrure, ou à la place de celle-ci présenter un calage sous une incidence négative et/ou une loi de vrillage sur tout ou partie de son envergure. Dans l'exemple des figures 1 à 4, cette surface 15 est entièrement fixe, mais il est possible qu'elle soit mobile et montée pivotante d'une seule pièce sur toute son envergure autour d'un axe s'étendant selon son envergure, de façon à constituer un empennage braquable asservi en incidence par une installation de commande de braquage reliée à un calculateur afin de modifier automatiquement la déportance en fonction des besoins.

La seconde surface aérodynamique 16 est inclinée vers le haut et du côté du rotor anti-couple caréné 7 vers lequel la poussée $F_f$ de ce rotor est dirigée, à pas positif de ses pales.

L'angle d'inclinaison de cette surface 16 sur la verticale (de 20° environ dans cet exemple) est ajusté de façon à éliminer ou à réduire dans une mesure significative le couplage des modes propres naturels de lacet et de tangage, qui résulte, en vol de croisière, de l'inclinaison sur la verticale du carénage 10 et du rotor anti-couple caréné 7. De plus, la seconde surface 16 présente une cambrure, représentée sur les figures 3c et 3d, afin de produire un effort aérodynamique transversal $F_d$ (voir figure 4) proportionnel au carré de la vitesse d'avancement de l'hélicoptère, dont la composante latérale $F_{yd}$ assure la totalité de la fonction anticouple, en vol de croisière à la vitesse maximale, le rotor anti-couple caréné n'exerçant alors aucune poussée $F_f$, d'où une réduction significative de la puissance motrice consommée.

Les figures 3c et 3d, qui représentent des coupes transversales de la seconde surface aérodynamique 16, proximité respectivement de son emplanture sur le sommet du carénage 10 et de son extrémité libre, montrent que cette surface 16 présente un profil dissymétrique biconvexe qui s'amincit progressivement de son emplanture à son extrémité libre, et qui est délimité par une surface d'extrados convexe 19, dont le rayon de courbure est supérieur à celui de la surface d'intrados 20, également convexe. De plus cette surface 16 peut présenter une loi de vrillage sur toute son envergure. La composante verticale $F_{zd}$ de l'effort aérodynamique transversal $F_d$ qui se développe sur cette seconde surface 16 correspond à une déportance, dont les effets s'ajoutent à ceux de la déportance $F_{ze}$ de la première surface aérodynamique 15 pour contribuer à l'équilibre longitudinal de l'hélicoptère en vol de croisière.

Pour développer la composante latérale $F_{yd}$, assurant au moins partiellement la fonction anti-couple, et la déportance $F_{zd}$, la seconde surface aérodynamique de lacet 16 peut présenter, à la place de sa cambrure, ou en plus de celle-ci, un calage à une incidence convenable. Dans l'exemple des figures 1 à 4, cette surface aérodynamique 16 est également entièrement fixe. Mais il est possible que cette surface 16 soit montée mobile d'une seule pièce sur toute sonenvergure autour d'un axe s'étendant selon son envergure et soit asservie en braquage par une installation de commande reliée à la commande de pas du rotor anti-couple, et ce, afin que sa manoeuvre soit commandée automatiquement lors de la commande en pas des pales du rotor anti-couple en vol de translation vers l'avant.

Enfin, par construction, la distance h (indiquée sur la figure 5) séparant le point de convergence des deux surfaces 15 et 16 de l'axe Y 10 du rotor caréné 7 peut être supérieure ou égale à une fois et demie la valeur du diamètre $\varnothing$ (également indiqué sur la figure 5) de la veine 9, et cela dans toutes les configurations et donc aussi dans les exemples des figures 5 et 6. Cette mesure technique permet d'éviter toute interférence éventuelle, gênante à faible vitesse de translation vers l'avant de l'hélicoptère, entre le souffle du rotor anti-couple caréné 7 et l'écoulement de l'air sur celle des surfaces aérodynamiques 15 et 16 qui est la plus voisine du rotor 7.

Le dispositif stabilisateur décrit ci-dessus en réfèrence aux figures 1 à 4 fonctionne de la manière suivante :

- En vol stationnaire de l'hélicoptère, le rotor anti-couple caréné 7 engendre une poussée $F_f$ dirigée suivant l'axe Y10. En raison de l'inclinaison de ce rotor, cette poussée se décompose en une force latérale $F_{yf}$ qui assure la fonction anti-couple et une force de portance $F_{zf}$ dont la valeur est égale à $F_f \sin \varphi_f$ (1), qui contribue à la sustentation générale de l'hélicoptère et permet un gain sur le bilan total de puissance de l'hélicoptère, ce gain atteignant 4 à 5 % si l'inclinaison du carénage 10 est de 45°. Le couplage tangage-lacet créé par l'inclinaison de la poussée du rotor caréné est compensé par un arrangement coordonné de la commande de pas des pales du rotor caréné avec la commande cyclique longitudinale du rotor principal.

- En vol de croisière, la majeure partie de la fonction anti-couple est assurée par la seconde surface aérodynamique 16. En effet, le flux aérodynamique sur cette surface génère un effort résultant transversal $F_d$ qui, du fait de l'inclinaison sur la verticale, se décompose en une composante latérale $F_{yd}$ qui assure la fonction anticouple sur l'hélicoptère et une composant verticale $F_{zd}$, dont la valeur est égale à $F_d \sin \varphi_d$, constituant une déportance qui vient s'ajouter à celle produite par la première surface aérodynamique 15.

L'ajustage de l'inclinaison de la surface aérodynamique de lacet 16 sur la verticale permet de compenser le couplage des modes propres de lacet et de tangage ainsi que le découplage du lacet par rapport aux variations d'incidence.

Si $C_y\beta f$ et $C_y\beta d$ représentent les gradients de portance respectivement de l'ensemble du carénage 10 et du rotor anti-couple caréné 7 à pas constant (lorsque le palonnier est bloqué dans une position), et de la seconde surface 16, dans le cas où les surfaces aérodynamiques 15 et 16 ne sont pas inclinées, c'est-à-dire dans le cas où les angles $\varphi_f$ et $\varphi_d$ sont nuls, et pour une variation de dérapage $\Delta\beta$, on a des efforts de rappel qui s'exercent respectivement sur le carénage 10 et sur la seconde surface aérodynamique 16, et qui s'expriment respectivement par les formules suivantes :

$$\Delta F_f = qSf \, C_y\beta f \, \Delta\beta \quad (2)$$
$$\Delta F_d = qSd \, C_y\beta d \, \Delta\beta \quad (3)$$

où q est la pression dynamique de l'air en mouvement , Sf est la surface latérale du carénage 10, Sd est la surface latérale de la surface 16.

Lorsque les surfaces aérodynamiques 15 et 16 sont inclinées, comme c'est le cas sur les figures 1 à 4, les variations effectives de dérapage sur ces surfaces sont respectivement données par les formules suivantes:

$$\Delta\beta f = \Delta\beta \cos \phi f \ (4)$$

et $\Delta\beta d = \Delta\beta \cos \phi d$ (5)

et les efforts de rappel s'expriment donc par les formules :

$$\Delta Fyf = \Delta Ff \cos \phi f = qSf \ Cy \ \beta f \ (\cos^2 \phi f) \ \Delta\beta \ (6)$$

et $\Delta Fyf = \Delta Fd \cos \phi d = qSd \ Cy \ \beta d \ (\cos^2 \phi \ d) \ \Delta\beta$ (7)

Les efforts verticaux induits $Fzf$ et $Fzd$ sont de sens contraire et valent :

$$\Delta Fzf = \Delta Ff \sin \phi f = qSf \ Cy\beta f \ (\cos \phi f \ \sin \phi f) \ \Delta\beta \ (8)$$

$$\Delta Fzd = \Delta Fd \sin \phi d = qSd \ Cy\beta \ d \ (\cos \phi d \ \sin \phi d) \ \Delta\beta \ (9)$$

Un découplage parfait du tangage par rapport au dérapage est obtenu si

$$|\Delta Fzf| = |\Delta Fzd|, \ (10)$$

soit avec un angle $\phi d$ vérifiant la formule suivante :

$$\frac{\sin (2\phi d)}{\sin (2\phi f)} \phi = \frac{Sf \quad Cy\beta f}{Sd \quad Cy\beta d} \qquad (11)$$

On peut montrer facilement qu'on obtient également un découplage du lacet par rapport aux variations d'incidence avec le même angle $\phi d$.

Par exemple, si :

$$\frac{Sf \quad Cy\beta f}{Sd \quad Cy\beta d} = 1 / 2$$

et que $\phi f = 30°$ ou $45°$, on calcule que $\phi d$ est respectivement égal à sensiblement 13° ou à 15°.

Un découplage en manoeuvre de l'hélicoptère peut être obtenu à l'aide d'un dispositif assurant une variation de portance soit sur la première surface aérodynamique 15, soit sur la seconde surface aérodynamique 16. Ce dispositif de variation de portance peut être constitué par une surface stabilisatrice à calage variable, comme déjà présenté ci-dessus, soit par au moins un volet mobile de bord de fuite, monté pivotant sur la surface stabilisatrice considérée, et dont le calage en incidence est variable, le dispositif de variation de portance étant, dans tous les cas, asservi à la position du palonnier de façon à ce que :

$\Delta Fzf + \Delta Fze = 0$ (12), ce qui correspond à une compensation par la première surface aérodynamique 15,

ou $\Delta Fzf = \Delta Fzd = 0$ (13), ce qui correspond à la compensation par la seconde surface aérodynamique 16.

De plus, dans le cas où le dispositif de variation de portance est monté sur la seconde surface 16 ou constitué par celle-ci, il participe au contrôle en lacet par la composante latérale $\Delta Fyd$.

Sur une configuration telle que celle représentée sur les figures 1 à 4, il convient de veiller au bon renforcement de l'attache de la première surface aérodynamique 15 sur le sommet du carénage 10, du fait que son moment d'encastrement est plus élevé que dans une réalisation selon le brevet français 2 167 249, en raison de la disposition de cette surface 15 entièrement en porte-à-faux d'un même côté. De plus, cette surface 15 devra également être plus rigide en torsion, pour éviter l'apparition du phénomène aérodynamique connu sous la dénomination de "flutter", qui correspond à une association de phénomènes vibratoires aéroélastiques.

Les avantages d'une telle configuration sont les suivants :

Les interactions entre les différentes surfaces aérodynamiques sont faibles, car les angles d'ouverture entre ces surfaces sont très ouverts, et de ce fait, les traînées d'interaction sont minimales.

L'efficacité aérodynamique d'une telle solution, montrée figure 4, est supérieure à celle d'un empennage "en -V" classique par le fait que les surfaces aérodynamiques 15 et 16 sont peu inclinées par rapport aux axes de lacet et de tangage, ce qui garantit une bonne efficacité. En particulier, les aires de ces surfaces 15 et 16 n'ont pratiquement pas à être augmentées, par rapport à celles d'un empennage droit classique, contrairement au cas de l'empennage "en-V" symétrique, pour lequel les aires doivent être augmentées d'environ 50 % si on veut retrouver la même efficacité que sur un empennage droit. En effet, si l'angle $\phi d$ est de 15°, l'aire de la surface aérodynamique 16 correspondante ne doit être augmentée que de

$$1 - \frac{1}{(\cos 15)^2} = 7 \ \%$$

La fonction de l'empennage horizontal est assurée par la surface aérodynamique 15 qui est en position plus reculée par rapport à l'axe du rotor principal que sur les solutions connues de l'état de la technique. Cette surface 15 a donc une efficacité accrue.

La seconde surface aérodynamique 16 est plus éloignée du sillage du rotor principal, lequel sillage est schématiquement représenté par la zone hachurée 21 sur la figure 4, d'où il résulte une meilleure efficacité en lacet qu'avec une dérive verticale conventionnelle.

Il est facile d'augmenter, en vol de transition, l'efficacité et/ou le rappel en lacet de la seconde surface aérodynamique 16 en montant à l'extrémité libre de la première surface aérodynamique 15, lorsque celle-ci est sensiblement horizontale, un plan aérodynamique 22 (voir figure 4) sensiblement perpendiculaire à son plan moyen Z 15 et calé avec un angle d'attaque tel que se crée une force aérodynamique latérale dans le même sens que celle existant sur la seconde surface aérodynamique 16.

En vol stationnaire, le vent latéral ne produit pas d'effort de portance venant perturber l'équilibre de l'hélicoptère en tangage, ce qui n'est pas vrai avec un empennage "en-V" conventionnel.

Le second exemple de réalisation, représenté sur la figure 5, correspond à une configuration moins particulière que celle des figures 1 à 4, dans la mesure où la première surface aérodynamique 25 n'est plus horizontale mais légèrement inclinée vers le haut, d'un angle d'inclinaison sur l'horizontale $\phi_e$ compris entre 0 et 45°, et proche dans cet exemple, de 12°. Comme la seconde surface aérodynamique 26 est inclinée sur la verticale d'un angle $\phi_d$ voisin de 16°, on retrouve, comme dans l'exemple précédent, que l'angle d'ouverture entre les deux surfaces de l'empennage "en V" est supérieur à 90°. Par contre, dans ce second exemple, l'angle $\phi_f$ d'inclinaison du carénage 10' sur la verticale est pratiquement égal à sa valeur supérieure admissible de 45°. Sur la figure 5, on a de plus indiqué la distance h séparant l'axe de la veine 9 et de l'hélice 8 du point de concours des plans moyens des deux surfaces 25 et 26 de l'empennage "en V, le diamètre $\varnothing$ de la veine 9, ainsi que des flèches V précisant le sens de l'écoulement de l'air qui traverse la veine 9 en raison de la rotation de l'hélice 8, lorsque ses pales ont une incidence positive. En outre, on a représenté le vrillage 27 que présente la surface 26 sur toute son envergure. Enfin, une autre différence avec le premier exemple est que l'épaisseur de la structure du carénage 10' diminue progressivement dans sa partie supérieure tout en conservant, à son sommet, une épaisseur suffisante pour pouvoir rigidement raccorder les deux surfaces aérodynamiques 25, 26 de l'empennage "en V" à ce sommet de la structure du carénage 10'.

Le troisième exemple de réalisation, représenté sur la figure 6, comporte un rotor anti-couple caréné et un carénage 10' qui sont identiques à ceux de la figure 5 et également inclinés d'un angle de 45°. Par contre, la première surface aérodynamique 35 de l'empennage "en V" est dans le prolongement du carénage 10', et la seconde surface aérodynamique 36, présentant un vrillage 37, est perpendiculaire aux plans du carénage 10' et de la surface aérodynamique 35. Cette configuration correspond donc au cas où chacun des trois angles mentionnés ci-dessus est égal à 45°, qui est sa valeur limite supérieure admissible.

Cette configuration est favorable du point de vue constructif, car elle consiste à incliner de 45° l'ensemble du rotor anti-couple caréné et du carénage qui le loge dans la réalisation de l'état de la technique qui équipe actuellement les hélicoptères des types "Gazelle" et "Dauphin" de la Demanderesse, puis à implanter perpendiculairement sur cet ensemble la surface aérodynamique 36, comme indiqué sur la figure 6.

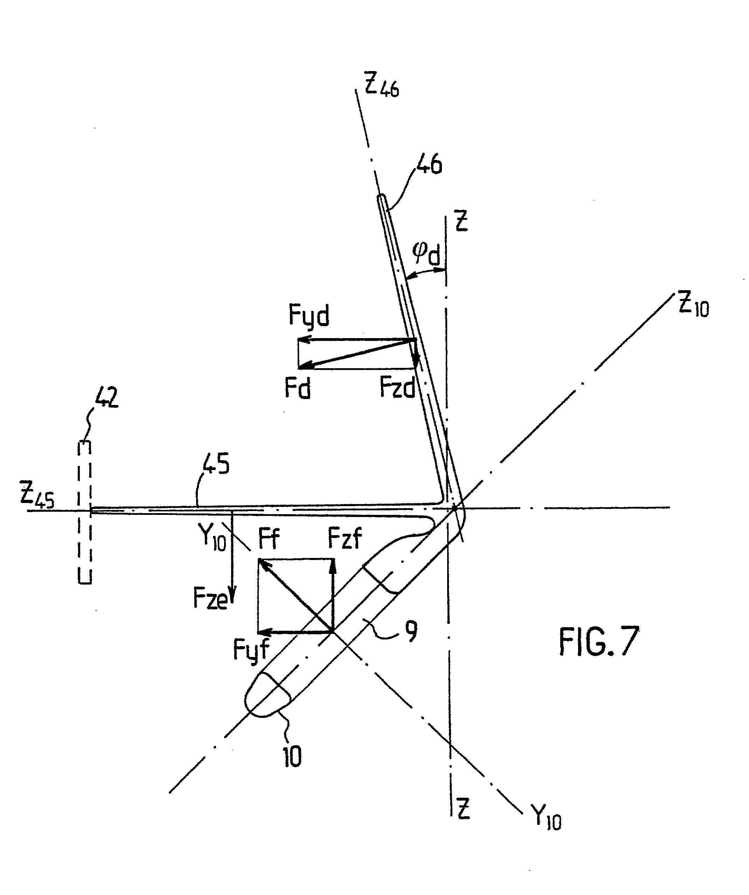

Le quatrième exemple de réalisation, représenté sur la figure 7, comporte un rotor anti-couple caréné, formé d'une veine 9 et d'un carénage 10, ainsi qu'une seconde surface aérodynamique 46, identiques respectivement à celui et celle de la figure 4.

Par contre, la première surface aérodynamique 45 est placée, par rapport au plan vertical de symétrie de l'hélicoptère, du côté vers lequel est dirigée la poussée du rotor anti-couple en vol stationnaire, et forme avec l'horizontale un angle nul. Mais cet angle pourrait, dans des variantes de réalisation, être compris dans une plage allant de 0 à 20°.

Cette première surface aérodynamique 45 peut, comme dans l'exemple montré figure 4, pour augmenter en vol de translation l'efficacité et/ou le rappel en lacet de la seconde surface 46, porter à son extrémité libre un plan aérodynamique 42 sensiblement perpendiculaire à son plan moyen Z45 et calé avec un angle d'attaque tel que se crée une force aérodynamique latérale dirigée dans le même sens que celle existante sur la seconde surface aérodynamique 46.

Cette quatrième configuration générale est favorable lorsqu'on désire, en vol de translation, utiliser le moment de roulis formé par la force déportante $F_{ze}$ sur la première surface aérodynamique 45 par rapport à l'axe longitudinal de l'hélicoptère pour compenser en tant que de besoin l'assiette latérale de l'appareil.

Dans les différentes configurations possibles, le choix des valeurs des angles $\phi_f$, $\phi_e$ et $\phi_d$ présentés ci-dessus résulte des caractéristiques recherchées en ce qui concerne, d'une part, l'importance de la contribution de la poussée du rotor anti-couple caréné à la portance générale de l'hélicoptère, et, d'autre part, le découplage plus ou moins accentué et souhaité entre les modes propres de tangage et de lacet de l'hélicoptère. Mais, dans tous les cas, du fait de l'existence, en vol stationnaire, d'un couplage tangage-lacet qui résulte de l'inclinaison du carénage logeant le rotor anti-couple, ce couplage doit être compensé par un agencement coordonné de la commande du pas des pales de l'hélice 8 du rotor anti-couple avec la commande cyclique longitudinale des pales du rotor principal.

## Revendications

1. Dispositif directionnel et stabilisateur pour aérodynes à voilure tournante comportant au moins un rotor qui, en configuration de rotor sustentateur (1), est entraîné mécaniquement en rotation pa au moins un moteur (3) en absorbant au moins partiellement la puissance motrice, et dont le fuselage (4) est soumis à la réaction du couple moteur d'entraînement du rotor sustentateur (1), laquelle réaction doit être compensée, ledit dispositif étant du type comprenant, en combinaison:

    – un rotor anti-couple (7) caréné, comportant une hélice multipale à pas variable (8) montée, d'une part coaxialement dans une veine carénée (9) de section circulaire ménagée transversalement dans un carénage (10) situé à l'arrière du fuselage (4), et entraînée, d'autre part, en rotation autour de l'axe (Y10) de la veine (9), et

    – un empennage "en-V" (14) porté par le carénage (10) logeant le rotor caréné (7) et comportant deux surfaces aérodynamiques (15, 16) disposées en V, qui se rejoignent au sommet du carénage (10) logeant le rotor caréné (7) sans venir en-dessous d'un plan horizontal passant par ce sommet, caractérisé en ce que:

    – le plan moyen du carénage (10) logeant le rotor caréné (7) et le plan de rotation du rotor caréné sont inclinés par rapport au plan de symétrie de l'aérodyne d'un angle ($\phi_f$) compris dans une plage angulaire de $0 < \phi_f \leq 45°$.

    – Le sens de rotation du rotor caréné et la commande de pas des pales dudit rotor sont agencés de sorte que, lesdites pales étant commandées à un pas positif, la poussée résultante suivant l'axe du rotor soit dirigée dans un sens tel que, d'une part la composante de ladite poussée parallèle à l'axe général transversal de l'aérodyne crée, sur le fuselage, par rapport à l'axe du rotor principal, un moment s'opposant au couple d'entraînement du rotor principal, et que, d'autre part, la composante de cette même poussée parallèle à l'axe général vertical de l'aérodyne soit dirigée vers le haut,

– chacune des deux surfaces aérodynamiques (15, 16) présente un plan moyen (Z15, Z16) et les deux plans moyens s'étendent de façon dissymétrique par rapport au plan vertical (ZZ) comprenant l'axe général longitudinal (XX) de l'aérodyne, le plan moyen de la première surface aérodynamique (15) est placé par rapport au plan vertical (ZZ) du côté qui est opposé à celui vers lequel est dirigée la poussée du rotor anticouple en vol stationnaire alors que le plan moyen de la seconde surface aérodynamique (16) est placé par rapport au plan vertical (ZZ) du côté vers lequel est dirigée la poussée du rotor anti-couple en vol stationnaire.

– Le plan moyen de la première surface aérodynamique (15) forme avec l'horizontale un angle ($\varphi_f$) compris dans une plage angulaire allant de 0 à 45° alors que le plan moyen de la seconde surface aérodynamique (16) forme avec la verticale un angle (d) comoris dans une plaque angulaire allat de 0 à 45°.

– La première surface aérodynamique (15) présente un profil aérodynamique tel qu'il génère en vol de translation, une force aérodynamique résultante avec une composante verticale déportante, c'est-à-dire dirigée vers le bas, et

– La seconde surface aérodynamique (16) présente un profil aérodynamique tel qu'il génère en vol de translation une force aérodynamique résultante ayant d'une part une composante parallèle à l'axe général transversal de l'aérodyne dirigée dans le même sens que la composante, suivant le même axe, de la poussée du rotor anticouple et d'autre part une composante parallèle à l'axe général vertical de l'aérodyne, dirigée vers le bas.

2. Dispositif directionnel et stabilisateur pour aérodynes à voilure tournante comportant au moins un rotor qui, en configuration de rotor sustentateur (1), est entraîné mécaniquement en rotation par au moins un moteur (3) en absorbant au moins partiellement la puissance motrice, et dont le fuselage (4) est soumis à la réaction du couple moteur d'entraînement du rotor sustentateur (1), laquelle réaction doit être compensée, ledit dispositif étant du type comprenant, en combinaison :

- un rotor anti-couple (7) caréné, comportant une hélice multipale à pas variable (8) montée′ d'une part coaxialement dans une veine carénée (9) de section circulaire menagée transversalement dans un carénage (10) situé à l'arrière du fuselage (4), et entraînée d'autre part, en rotation autour de l'axe (Y10) de la veine (9), et

- un empennage "en-V" (14) porté par le carénage (10) logeant le rotor caréné (7) et comportant deux surfaces aérodynamiques (45,46) disposées en V, qui se rejoignent au sommet du carénage (10) logeant le rotor caréné (7) sans venir en-dessous d'un plan horizontal passant par ce sommet, caractérisé en ce que :

- le plan moyen du carénage (10) logeant le rotor caréné (7) et le plan de rotation du rotor caréné sont inclinés par rapport au plan de symétrie de l'aérodyne d'un angle ($\varphi_f$) compris dans une plage angulaire de $0 < \varphi_f \leq 45°$.

- Le sens de rotation du rotor caréné et la commande de pas des pales dudit rotor sont agencés de sorte que, lesdites pales étant commandées à un pas positif, la poussée résultante suivant l'axe du rotor soit dirigée dans un sens tel que, d'une part la composante de ladite poussée parallèle à l'axe général transversal de l'aérodyne crée, sur le fuselage, par rapport à l'axe du rotor principal, un moment s'opposant au couple d'entraînement du rotor principal, et que, d'autre part, la composante de cette même poussée parallèle à l'axe général vertical de l'aérodyne soit dirigée vers le haut,

- chacune des deux surfaces (45 et 46) présente un plan moyen (Z45 et Z46) et les deux plans moyens s'étendent de façon dissymétrique par rapport au plan vertical de symétrie de l'aérodyne, le plan moyen de la première surface aérodynamique (45) est placé par rapport audit plan vertical de symétrie du côté vers lequel est dirigée la poussée du rotor anti-couple en vol stationnaire, alors que le plan moyen de la seconde surface aérodynamique (46) est placé par rapport au plan vertical de symétrie de l'aérodyne également du côté vers vers lequel est dirigée la pous sée du rotor anti-couple en vol stationnaire,

- le plan moyen de la première surface aérodynamique (45) forme avec l'horizontale un angle compris dans une plage angulaire de 0 à 20° tandis que le plan moyen de la seconde surface aérodynamique (46) forme avec la verticale un angle ($\varphi_d$) compris dans une plage angulaire allant de 0 à 45°,

- La première surface aérodynamique (45) présente un profil aérodynamique tel qu'il génère en vol de translation, une force aérodynamique résultante avec une composante verticale déportante, c'est-à-dire dirigée vers le bas, et

- La seconde surface aérodynamique (46) présente un profil aérodynamique tel qu'il génère en vol de translation une force aérodynamique résultante ayant d'une part une composante parallèle l'axe général transversal de l'aérodyne dirigée dans le même sens que la composante, suivant le même axe, de la poussée du rotor anti-couple et d'autre part une composante parallèle l'axe général vertical de l'aérodyne, dirigée vers le bas.

3. Dispositif selon l'une des revendications 1 et 2, caractérisé en ce que la distance (h) séparant la jonction des deux surfaces aérodynamiques (15,16 ; 45,46) de l'axe (Y 10) de la veine carénée (19) est au moins égale à une fois et demie le diamètre (Ø) de ladite veine.

4. Dispositif selon la revendication 1, caractérisé en ce que le plan moyen (Z 15) de la première surface aérodynamique (15) est horizontal et forme avec le plan moyen (Z 16) de la seconde surface aérodynamique (16) un angle supérieur à 90°.

5. Dispositif selon la revendication 1, caractérisé en ce que le carénage (10′) logeant le rotor anticouple (7) est incliné à 45° sur la verticale, la première surface aérodynamique (25) étant dans le prolongement du carénage (10′) logeant le rotor caréné, et les deux surfaces aérodynamiques (25,26) ayant leurs plans moyens perpendiculaires l'un à l'autre.

6. Dispositif selon l'une des revendications 1 à 5, caractérisé en ce que la première surface aérodynamique (15) présente une cambrure à courbure tournée vers le haut et/ou une loi de vrillage et/ou une incidence négative, 5 de façon à produire une déportance nécessaire pour assurer l'équilibre longitudinal de l'aérodyne en vol de croisière.

7. Dispositif selon l'une des revendications 1 à 6, caractérisé en ce que la première surface aérodynamique (15) est entièrement fixe.

8. Dispositif selon l'une des revendications 1 à 7, caractérisé en ce que la seconde surface aérodynamique (16) présente une cambrure et/ou une loi de vrillage et/ou une incidence choisie de façon à produire un effort aérodynamique latéral ($F_{yd}$) assurant au moins partiellement la fonction anti-couple en vol de croisière de l'aérodyne.

9. Dispositif selon la revendication 8, caractérisé en ce que la seconde surface aérodynamique (16) est entièrement fixe.

10. Dispositif selon l'une des revendications 1 à 6 et 8, caractérisé en ce que l'une des surfaces aérodynamiques est mobile sur toute son envergure et articulée autour d'un axe de pivotement dirigé selon l'envergure en étant asservie par une commande de braquage reliée à la commande de pas du rotor anti-couple (7) de l'aérodyne.

11. Dispositif selon l'une des revendications 1 à 6 et 8, caractérisé en ce que l'une des surfaces aérodynamiques comporte au moins un volet mobile de bord de fuite, s'étendant sur au moins une partie de son envergure et dont le braquage est asservi, par une commande reliée la commande de pas du rotor anti-couple de l'aérodyne.

12. Dispositif selon l'une des revendications 1 à 11, caractérisé en ce que, dans le cas où la première surface aérodynamique (15,45) est sensiblement horizontale, ladite première surface porte son extrémité libre, un plan aérodynamique (22,42) sensiblement perpendiculaire à son plan moyen (Z15, Z45), calé avec un angle d'attaque tel qu'il génère en vol de translation, une force latérale dirigée dans le même sens que la force latérale de la seconde surface aérodynamique (16,46).

13. Hélicoptère comportant un dispositif selon l'une des revendications 1 à 12, caractérisé par un arrangement coordonné de la commande de pas des pales du rotor anti-couple caréné (7) avec la commande cyclique longitudinale du rotor principal (1) de façon que l'accroissement du pas des pales du rotor anti-couple (7) introduise automatiquement une adaptation compensatoire du pas cyclique longitudinal du rotor principal (1) limitant les variations d'assiette longitudinale du fuselage (4) de l'hélicoptère.

## Claims

1. Directional and stabilising device for aerodynes with rotary wing comprising at least one rotor which, in the shape of a lifting rotor (1), is mechanically driven in rotation by at least one engine (3), while at least partially absorbing the driving power, and the fuselage (4) of which is subjected to the reaction of the drive torque of the lifting rotor (1), which reaction has to be compensated, the said device being of the type which comprises, in combination:
   - a shrouded tail rotor (7), comprising a multiblade airscrew (8) with variable pitch, on the one hand mounted coaxially in a shrouded air passage (9) of circular section provided transversely in a fairing (10) located at the ear of the fuselage (4), and on the other hand driven in rotation about the axis (Y10) of the air passage (9), and
   - a V-shaped tail unit (14) carried by the fairing (10) housing the shrouded rotor (7) and having two aerodynamic surfaces (15, 16) arranged in a V-shape, which join at the apex of the fairing (10) housing the shrouded rotor (7) without extending below a horizontal plane passing through the said apex, characterised in that:
   - the middle plane of the fairing (10) housing the shrouded rotor (7) and the plane of rotation of the shrouded rotor are inclined in relation to the plane of symmetry of the aerodyne by an angle ($\varphi_f$) which is within an angular range of $0 < \varphi_f \leq 45°$.
   - The direction of rotation of the shrouded rotor and the pitch control of the blades of the said rotor are such that, the said blades being driven at a positive pitch, the resultant thrust in the direction of the axis of the rotor is orientated in a direction such that on the one hand the component of the said thrust parallel to the general transverse axis of the aerodyne produces, on the fuselage, in relation to the axis of the main rotor, a moment which opposes the drive torque of the main rotor, and that, on the other hand, the component of that same thrust parallel to the general vergical axis of the aerodyne is directed upwards,
   - each of the two aerodynamic surfaces (15, 16) has a middle plane (Z15, Z16) and the two middle planes extend asymmetrically in relation to the vertical plane (ZZ) comprising the general longitudinal axis (XX) of the aerodyne, the middle plane of the first aerodynamic surface (15) is placed, in relation to the vertical plane (ZZ), on the side opposed to that towards which the thrust of the tail rotor is directed while hovering, while the middle plane of the second aerodynamic surface (16) is placed, in relation to the vertical plane (ZZ), on the side towards which the thrust of the rail rotor is directed while hovering.
   - The middle plane of the first aerodynamic surface (15) forms with the horizontal an angle ($\varphi_e$) which is within an angular range of from 0 to 45°,

while the middle plane of the second aerodynamic surface (16) forms with the vertical an angle ($\varphi_d$) which is within an angular range of from 0 to 45°.

- The first aerodynamic surface (15) has an aerodynamic profile such that in translational flight it generates a resultant aerodynamic force having a vertical descending component, that is to say, directed downwards, and

- the second aerodynamic surface (16) has an aerodynamic profile such that in translational flight it generates a resultatnt aerodynamic force having on the one hand a component parallel to the general transverse axis of the aerodyne orientated in the same direction as the component, along the same axis, of the thrust of the tail rotor, and on the other hand a component parallel to the general vertical axis of the aerodyne, directed downwards.

2. Directional and stabilising device for aerodynes with rotary wing comprising at least one rotor which, in the shape of a lifting rotor (1), is mechanically driven in rotation by at least one engine (3), while at least partially absorbing the driving power, and the fuselage (4) of which is subjected to the reaction of the drive torque of the lifting rotor (1), which reaction has to be compensated, the said device being of the type which comprises, in combination:

- a shrouded tail rotor (7), comprising a multiblade airscrew (8) with variable pitch, on the one hand mounted coaxially in a shrouded air passage (9) of circular section provided transversely in a fairing (10) located at the rear of the fuselage (4), and on the other hand driven in rotation about the axis (Y10) of the air passage (9), and

- a V-shaped tail unit (14) carried by the fairing (10) housing the shrouded rotor (7) and comprising two aerodynamic surfaces (45, 46) arranged in a V-shape which join at the fairing (10) housing the shrouded rotor (7) without extending below a horizontal plane passing through the said apex, characterised in that:

- The middle plane of the fairing (10) housing the shrouded rotor (7) and the plane of rotation of the shrouded rotor are inclined in relation to the plane of symmetry of the aerodyne by an angle ($\varphi_f$) which is within an angular range of $0 < \varphi_f \leq 45°$.

- The direction of rotation of the shrouded rotor and the pitch control of the blades of the said rotor are such that, the said blades being driven with a positive pitch, the resultant thrust in the direction of the axis of the rotor is orientated in a direction such that on the one hand the component of the said thrust parallel to the general transverse axis of the aerodyne produces, on the fuselage, in relation to the axis of the main rotor, a moment which opposes the drive torque of the main rotor, and that, on the other hand, the component of the same thrust parallel to the general vertical axis of the aerodyne is directed upwards,

- each of the two surfaces (45 and 46) has a middle plane (Z45 and Z46) and the two middle planes extend axymmetrically in relation to the vertical plane of symmetry of the aerodyne, the middle plane of the first aerodynamic surface (45) is placed, in relation to the said vertical plane of symmetry, on the side towards which the thrust of the tail rotor is directed while hovering, while the middle plane of the second aerodynamic surface (46) is placed, in relation to the vertical plane of symmetry of the aerodyne, also on the side towards which the thrust of the tail rotor is directed while hovering,

- the middle plane of the first aerodynamic surface (45) forms with the horizontal an angle which is within an angular range of from 0 to 20° while the middle plane of the second aerodynamic surface (46) forms with the vertical an angle ($\varphi_f$) which is within an angular range of from $0 < \varphi_f \leq 45°$,

- the first aerodynamic surface (45) has an aerodynamic profile such that in translational flight it generates a resultant aerodynamic force having a vertical descending component, that is to say, directed downwards, and

- the second aerodynamic surface (46) has an aerodynamic profile such that in translational flight it generates a resultant aerodynamic force having on the one hand a component parallel to the general transverse axis of the aerodyne orientated in the same direction as the component, along the same axis, of the thrust of the tail rotor and on the other hand a component parallel to the general vertical axis of the aerodyne, directed downwards.

3. Device according to either of Claims 1 and 2, characterised in that the distance (h) separating the junction of the two aerodynamic surfaces (15, 16; 45, 46) from the axis (Y10) of the shrouded air passage (19) is at least one and a half times the diameter (∅) of the said air passage.

4. Device according to Claim 1, characterised in that the middle plane (Z15) of the first aerodynamic surface (15) is horizontal and forms with the middle plane (Z16) of the second aerodynamic surface (16) an angle greater than 90°.

5. Device according to Claim 1, characterised in that the fairing (10') housing the tail rotor (7) is inclined at 45° to the vertical, the first aerodynamic surface (25) being in extension of the fairing (10') housing the shrouded rotor, and the two aerodynamic surfaces (25, 26) having their middle planes perpendicualr to each other.

6. Device according to one of Claims 1 to 5, characterised in that the first aerodynamic surface (15) has a camber with an upward-turned curvature and/or a negative twist and/or angle of incidence, so as to produce a descending force necessary to provide the longitudinal equilibrium fo the aerodyne in cruising flight.

7. Device according to one of Claims 1 to 6, characterised in that the first aerodynamic surface (15) is completely fixed.

8. Device according to one of Claims 1 to 7, characterised in that the second aerodynamic surface (16) has a camber and/or a twist and/or an angle of incidence selected in such a way as to produce a lat-

eral aerodynamic force ($F_{yd}$) at least partially providing the anti-torque function for the aerodyne in cruising flight.

9. Device according to Claim 8, characterised in that the second aerodynamic surface (16) is completely fixed.

10. Device according to one of Claims 1 to 6 and 8, characterised in that one of the aerodynamic surfaces is movable over its whole length and hinged about a pivoting axis orientated in the direction of the length, being served by a deflection control connected to the pitch control of the tail rotor (7) of the aerodyne.

11. Device according to one of Claims 1 to 6 and 8, characterised in that one of the aerodynamic surfaces comprises at least one movable trailing edge flap, extending over at least a part of its length, and the deflection of which is effected by a control connected to the pitch control of the tail rotor of the aerodyne.

12. Device according to one of Claims 1 to 11, characterised in that, when the first aerodynamic surface (15, 45) is substantially horizontal, the said first surface carries at its free end an aerodynamic plane (2, 42) substantially perpendicular to its middle plane (Z15, Z45), offset with an angle of attack such that in translational flight it generates a lateral force orientated in the same direction as the lateral force of the second aerodynamic surface (16, 46).

13. Helicopter comprising a device according to one of Claims 1 to 12, characterised by a co-ordinated arrangement of the pitch control of the blades of the shrouded tail rotor (7) with the longitudinal cyclic control of the main rotor (1) so that the increase in pitch of the blades of the tail rotor (7) automatically introduces a compensatory adaptation of the longitudinal cyclic pitch of the main rotor (1) limiting the variations in the angle of inclination of the fuselage (4) of the helicopter.

**Patentansprüche**

1. Leit- und Stabilisierungsvorrichtung für Luftfahrzeuge mit einem Drehflügel, welche wenigstens einen Rotor aufweisen, der als tragender Rotor (1) ausgebildet und zur Rotation unter wenigstens teilweiser Aufnahme der Antriebsleistung von wenigstens einem Motor (3) mechanisch angetrieben ist, und deren Rumpf (4) eine Gegenkraft zum Motordrehmoment beim Antrieb des tragenden Rotors (1) erfährt, welche zu kompensieren ist, wobei diese Vorrichtung in Kombination beinhaltet:
   – einen verkleideten Gegenmoment-Rotor (7) mit einer Mehrblattschraube (8) mit variabler Anstellung, welche zum einen koaxial in einem windschlüpfig verkleideten Durchlaß (9) mit kreisförmigem Querschnitt angebracht ist, der querverlaufend in einer Verkleidung (10) am hinteren Ende des Rumpfes (4) ausgespart ist, und zum anderen zur Rotation um die Achse ($Y_{10}$) des Durchlasses (9) angetrieben ist, und
   – ein von der den verkleideten Rotor (7) aufnehmenden Verkleidung (10) getragenes V-förmiges Leitwerk (14), welches zwei aerodynamische, V-förmig angeordnete Flächen (15, 16) aufweist, die am höchsten Punkt der den verkleideten Rotor (7) aufnehmenden Verkleidung (10) zusammenstoßen, wobei sie sich gänzlich oberhalb einer horizontalen, durch diesen höchsten Punkt gehenden Ebene erstrecken, dadurch gekennzeichnet, daß:
   – die Mittelebene der den verkleideten Rotor (7) aufnehmenden Verkleidung (10) und die Rotationsebene des verkleideten Rotors gegenüber der Symmetrieebene des Luftfahrzeuges um einen Winkel ($\varphi_f$) geneigt sind, der in einem Winkelbereich $0 < \varphi_f \leq 45°$ liegt;
   – die Drehrichtung des verkleideten Rotors und die Anstellwinkelsteuerung dieses Rotors so eingerichtet sind, daß bei positiv angestellten Rotorblättern der resultierende Axialdruck längs der Rotorachse so gerichtet ist, daß zum einen die Druckkomponente parallel zur transversalen Hauptachse des Luftfahrzeuges auf den Rumpf in Bezug auf die Drehachse des Hauptrotors ein dem Antriebsmoment des Hauptrotors entgegengerichtetes Moment ausübt und zum anderen die Komponente derselben Druckkraft parallel zur vertikalen Hauptachse des Luftfahrzeuges nach oben gerichtet wird;
   – jede der beiden aerodynamischen Flächen (15, 16) eine Mittelebene ($Z_{15}$, $Z_{16}$) besitzt und die beiden Mittelebenen bezüglich der die Längsachse (XX) des Luftfahrzeuges enthaltenden Vertikalebene (ZZ) asymmetrisch angeordnet sind, wobei die Mittelebene der ersten aerodynamischen Fläche (15) sich bezüglich der Vertikalebene (ZZ) auf der Seite befindet, die derjenigen gegenüberliegt, zu welcher die Druckkraft des Gegenmoment-Rotors bei stationärem Flug hinzeigt, während die Mittelebene der zweiten aerodynamischen Fläche (16) sich bezüglich der Vertikalebene (ZZ) auf der Seite befindet, zu der die Druckkraft des Gegenmoment-Rotors bei stationärem Flug hinzeigt;
   – die Mittelebene der ersten aerodynamischen Fläche (15) mit der Horizontalen einen zwischen 0 und 45° liegenden Winkel ($\varphi_e$) einschließt, während die Mittelebene der zweiten aerodynamischen Fläche (16) mit der Vertikalen einen zwischen 0 und 45° liegenden Winkel ($\varphi_d$) einschließt;
   – die erste aerodynamische Fläche (15) ein aerodynamisches Profil derart aufweist, daß es beim Translationsflug eine resultierende aerodynamische Kraft mit einer vertikalen Abtriftkomponente, d.h. nach unten weisend, erzeugt, und
   – die zweite aerodynamische Fläche (16) ein aerodynamisches Profil derart aufweist, daß es im Translationsflug eine resultierende aerodynamische Kraft erzeugt, welche einerseits eine Komponente parallel zur transversalen Hauptachse des Luftfahrzeuges und in dieselbe Richtung zeigend wie die Komponente der Druckkraft des Heckrotors entlang derselben Achse und andererseits eine Komponente parallel zur vertikalen Hauptachse des Luftfahrzeuges und nach unten zeigend aufweist.

2. Leit- und Stabilisierungsvorrichtung für Luftfahrzeuge mit einem Drehflügel, welche wenigstens einen Rotor aufweisen, der als tragender Rotor (1) ausgebildet und zur Rotation unter wenigstens teilweiser Aufnahme der Antriebsleistung von wenigstens einem Motor (3) mechanisch angetrieben ist, und deren Rumpf (4) eine Gegenkraft zum Motordrehmoment beim Antrieb des tragenden Rotors (1) erfährt, welche zu kompensieren ist, wobei diese Vorrichtung in Kombination beinhaltet:

- einen verkleideten Gegenmoment-Rotor (7) mit einer Mehrblattschraube (8) mit variabler Anstellung, welche zum einen koaxial in einem windschlüpfig verkleideten Durchlaß (9) mit kreisförmigem Querschnitt angebracht ist, der querverlaufend in einer Verkleidung (10) am hinteren Ende des Rumpfes (4) ausgespart ist, und zum anderen zur Rotation um die Achse ($Y_{10}$) des Druchlasses (9) angetrieben ist, und

- ein von der den verkleideten Rotor (7) aufnehmenden Verkleidung (10) getragenes V-förmiges Leitwerk (14), welches zwei aerodynamische, V-förmig angeordnete Flächen (45, 46) aufweist, die am höchsten Punkt der den verkleideten Rotor (7) aufnehmenden Verkleidung (10) zusammenstoßen, wobei sie sich gänzlich oberhalb einer horizontalen, durch diesen höchsten Punkt gehenden Ebene erstrecken, dadurch gekennzeichnet, daß:

- die Mittelebene der den verkleideten Rotor (7) aufnehmenden Verkleidung (10) und die Rotationsebene des verkleideten Rotors gegenüber der Symmetrieebene des Luftfahrzeuges um einen Winkel ($\varphi_f$) geneigt sind, der in einem Winkelbereich $0 < \varphi_f \leq 45°$ liegt;

- die Drehrichtung des verkleideten Rotors und die Anstellwinkelsteuerung dieses Rotors so eingerichtet sind, daß bei positiv angestellten Rotorblättern der resultierende Axialdruck längs der Rotorachse so gerichtet ist, daß zum einen die Druckkomponente parallel zur transversalen Hauptachse des Luftfahrzeuges auf den Rumpf in Bezug auf die Drehachse des Hauptrotors ein dem Antriebsmoment des Hauptrotors entgegengerichtetes Moment ausübt und zum anderen die Komponente derselben Druckkraft parallel zur vertikalen Hauptachse des Luftfahrzeuges nach oben gerichtet wird;

- jede der beiden aerodynamischen Flächen (45, 46) eine Mittelebene ($Z_{45}$, $Z_{46}$) besitzt und die beiden Mittelebenen bezüglich der vertikalen Symmetrieebene des Luftfahrzeuges asymmetrisch angeordnet sind, wobei die Mittelebene der ersten aerodynamischen Fläche (45) sich bezüglich dieser vertikalen Symmetrieebene auf der Seite befindet, zu welcher die Druckkraft des Gegenmoment-Rotors bei stationärem Flug hinzeigt, und die Mittelebene der zweiten aerodynamischen Fläche (46) sich bezüglich der vertikalen Symmetrieebene des Luftfahrzeuges ebenfalls auf der Seite befindet, zu welcher die Druckkraft des Gegenmoment-Rotors bei stationärem Flug hinzeigt;

- die Mittelebene der ersten aerodynamischen Fläche (45) mit der Horizontalen einen Winkel zwischen 0 und 20° einschließt, wohingegen die Mittelebene der zweiten aerodynamischen Fläche (46) mit der Vertikalen einen zwischen 0 und 45° liegenden Winkel ($\varphi_d$) einschließt;

- die erste aerodynamische Fläche (45) ein aerodynamisches Profil derart aufweist, daß es beim Translationsflug eine resultierende aerodynamische Kraft mit einer vertikalen Abriftkomponente, d.h. nach unten weisend, erzeugt, und

- die zweiten aerodynamische Fläche (46) ein aerodynamisches Profil derart aufweist, daß es im Translationsflug eine resultierende aerodynamische Kraft erzeugt, welche einerseits eine Komponente parallel zur transversalen Hauptachse des Luftfahrzeuges und in dieselbe Richtung zeigend wie die Komponente der Druckkraft des Heckrotors entlang derselben Achse und andererseits eine Komponente parallel zur vertikalen Hauptachse des Luftfahrzeuges und nach unten zeigend aufweist.

3. Vorrichtung nach einem der Ansprüche 1 und 2, dadurch gekennzeichnet, daß der Abstand (h) zwischen der gemeinsamen Verbindungslinie der beiden aerodynamischen Flächen (15, 16; 45, 46) und der Achse ($Y_{10}$) des verkleideten Durchlasses (9) wenigstens das Anderthalbfache des Durchmessers ($\varnothing$) dieses Durchlasses beträgt.

4. Vorrichtung nach Anspruch 1, dadurch gekennzeichnet, daß die Mittelebene ($Z_{15}$) der ersten aerodynamischen Fläche (15) horizontal ist und mit der Mittelebene ($Z_{16}$) der zweiten aerodynamischen Fläche (16) einen Winkel größer als 90° einschließt.

5. Vorrichtung nach Anspruch 1, dadurch gekennzeichnet, daß die den Gegenmoment-Rotor (7) aufnehmende Verkleidung (10') gegen die Vertikale um 45° geneigt ist, wobei die erste aerodynamische Fläche (25) eine Verlängerung der den Gegenmoment-Rotor aufnehmenden Verkleidung (10') bildet und die beiden aerodynamischen Flächen (25, 26) zueinander senkrecht stehende Mittelebenen besitzen.

6. Vorrichtung nach einem der Ansprüche 1 bis 5, dadurch gekennzeichnet, daß die erste aerodynamische Fläche (15) eine Wölbung mit nach oben gewandter Krümmung und/oder eine verdrillten Verlauf und/oder einen negativen Anstellwinkel dergestalt aufweist, daß eine Versetzung erzeugt wird, welche zur Gewährleistung der Längsbalance des Luftfahrzeuges beim Marschflug notwendig ist.

7. Vorrichtung nach einem der Ansprüche 1 bis 6, dadurch gekennzeichnet, daß die erste aerodynamische Fläche (15) vollkommen unbeweglich ist.

8. Vorrichtung nach einem der Ansprüche 1 bis 7, dadurch gekennzeichnet, daß die zweite aerodynamische Fläche (16) eine Wölbung und/oder einen verdrillten Verlauf und/oder einen Anstellwinkel aufweist, dergestalt gewählt, daß eine seitwärts wirkende aerodynamische Kraft ($F_{yd}$) erzeugt wird, welche wenigstens zum Teil die Funktion des Gegendrehmoments beim Marschflug des Luftfahrzeuges erfüllt.

9. Vorrichtung nach Anspruch 8, dadurch gekennzeichnet, daß die zweite aerodynamische Fläche (16) vollkommen unbeweglich ist.

10. Vorrichtung nach einem der Ansprüche 1 bis 6 und 8, dadurch gekennzeichnet, daß eine der aerodynamische Flächen über ihre gesamte Spannweite beweglich und an einer Schwenkachse angelenkt ist, welche der Spannweite entsprechend ausgerichtet ist, um sie durch einen Lenkbefehl, der mit der Anstellwinkelsteuerung der Gegenmoment-Rotors (7) des Luftfahrzeuges gekoppelt ist, zu steuern.

11. Vorrichtung nach einem der Ansprüche 1 bis 6 und 8, dadurch gekennzeichnet, daß eine der aerodynamischen Flächen wenigstens eine bewegliche Klappe an der Hinterkante besitzt, wobei sich die Klappe entlang wenigstens eines Teiles der Spannweite der aerodynamischen Fläche erstreckt und ihre Einstellung von einem Befehl gesteuert ist, welcher mit der Anstellwinkelsteuerung des Gegenmoment-Rotors des Luftfahrzeuges gekoppelt ist.

12. Vorrichtung nach einem der Ansprüche 1 bis 11, dadurch gekennzeichnet, daß im Fall der genau horizontalen Lage der ersten aerodynamische Fläche (15, 45) diese an ihrem freien Ende eine genau senkrechte auf ihrer Mittelebene ($Z_{15}$, $Z_{45}$) stehende ebene aerodynamische Fläche (22, 42) trägt, welche mit einem derartigen Anstellwinkel befestigt ist, daß sie beim Translationsflug eine seitwärts wirkende Kraft erzeugt, die in dieselbe Richtung zeigt wie die seitwärts wirkende Kraft der zweiten aerodynamischen Fläche (16, 46).

13. Hubschrauber mit einer Vorrichtung nach einem der Ansprüche 1 bis 12, gekennzeichnet, durch eine Anordnung, welche die Anstellwinkelsteuerung des verkleideten Gegenmoment-Rotors (7) so mit der Steuerung der Längsdrehung des Hauptrotors (1) abstimmt, daß die Zunahme des Anstellwinkels des Gegenmoment-Rotors (7) automatisch eine die schrittweise Längsdrehung des Hauptrotors (1) compensierende Anpassung erzeugt, die die Schwankungen um die richtige Längslage des Rumpfs (4) des Hubschraubers begrenzt.

FIG.1

FIG.2

FIG.3a

FIG.3b

FIG.3c

FIG.3d

FIG.4

FIG.6

FIG.5

FIG.7